# EUROPÄISCHE PATENTSCHRIFT

(11) **EP 0 958 460 B1**
(45) Veröffentlichungstag und Bekanntmachung des Hinweises auf die Patenterteilung: **10.04.2002**
(21) Anmeldenummer: 98909285.3
(22) Anmeldetag: 26.01.1998
(51) Int. Cl.: F16D 3/38

(54) **SCHRÄGROLLEN-LAGERUNG**
BEARING WITH INCLINED ROLLERS
nALIER A ROULEMENT AVEC ROULEAUX INCLINES

(30) Priorität: 10.02.1997 DE 19704909
(43) Veröffentlichungstag der Anmeldung: 24.11.1999
(73) Patentinhaber: SKF GmbH, 97421 Schweinfurt (DE)
(72) Erfinder: BAUER, Bernhard, D-97437 Hassfurt (DE); GEBAUER, Horst, D-97529 Alitzheim (DE); HALLSTROM, Fredrik, D-42244 Hisings Backa (DE); KELLSTRÖM, Magnus, S-433 41 Partille (SE); STUBENRAUCH, Arno, D-97491 Aidhausen (DE)
(74) Vertreter: Hetterich, Winfried
(86) Internationale Anmeldenummer: DE9800236
(87) Internationale Veröffentlichungsnummer: WO9835168

(56) Entgegenhaltungen:
- DE-C- 3 841 341
- GB-A- 2 101 271
- US-A- 4 129 016

## Beschreibung

Die Erfindung betrifft eine Schrägrollen-Lagerung nach dem Oberbegriff des Hauptanspruches.

Durch die GB-A-2 101 271 ist ein Kreuzgelenk bekannt, dessen Gelenkbüchsen mit Pendelrollen versehen sind. Wie bei bekannten Pendelrollenlagern üblich, liegt der Schwenkmittelpunkt auf der Lagerachse und in der axialen Mitte von jedem Lager. Die Gelenkbüchsen können nur zusammengebaut werden, wenn keine vollrollige Ausführung benutzt wird und ein Käfig eingebaut ist. Wenn die Pendelrollenlager nicht extrem präzise axial positioniert sind, ist die axiale Länge der Tragzone stark eingeschränkt, wodurch ein früher Ausfall der gesamten Lagerung programmiert ist.

Aufgabe ist es, eine Schrägrollen-Lagerung der eingangs genannten Art zu schaffen, die eine geringe radiale und axiale Bauhöhe aufweist und hoch belastbar ist, eine ausreichende Schwenkmöglichkeit und bei geringem Einbauaufwand eine gute Lastverteilung in axialer Richtung der Laufbahnen aufweist.

Die Aufgabe wird dadurch gelöst, daß der Krümmungsradius der Laufbahn größer als der Laufbahnradius ist und deren Mittelpunkt in einem Bereich von der axialen Mitte zwischen beiden Schrägrollenlagern bis zur axialen Mitte des betreffenden Schrägrollenlagers angeordnet ist.

Durch diese erfindungsgemäßen Merkmale behält die Schrägrollen-Lagerung nahezu die geringen radialen Abmessungen einer Lagerung mit zylindrischen Nadeln, hat jedoch darüberhinaus vorteilhafterweise gleichzeitig die Funktion einer Axiallagerung und eine für den Anwendungsfall ausreichende Schwenkmöglichkeit. Durch die extrem großen Krümmungsradien ist es möglich, die Nadeln sehr schlank, d. h. mit kleinem Durchmesser auszuführen. Ein geringes, jedoch ausreichendes Schwenken wird durch das Radialspiel ermöglicht. Die erfindungsgemäße Schrägrollen-Lagerung erfüllt vorbildlich die Anforderungen von radialer und axialer Belastbarkeit auf engstem Raum und eine Anpassung an gleichmäßige Traglastverteilung durch die Schwenkmöglichkeit.

Diese und weitere Merkmale werden nachfolgend an dem in der Zeichnung dargestellten Beispiel beschrieben.

Es zeigen:
- Figur 1: den teilweisen Querschnitt eines Kreuzgelenkes mit zwei Schrägrollenlagern in X-Anordnung und
- Figur 2: den Längsschnitt eines Schrägrollenlagers nach Figur 1 in geschwenkter Lage.

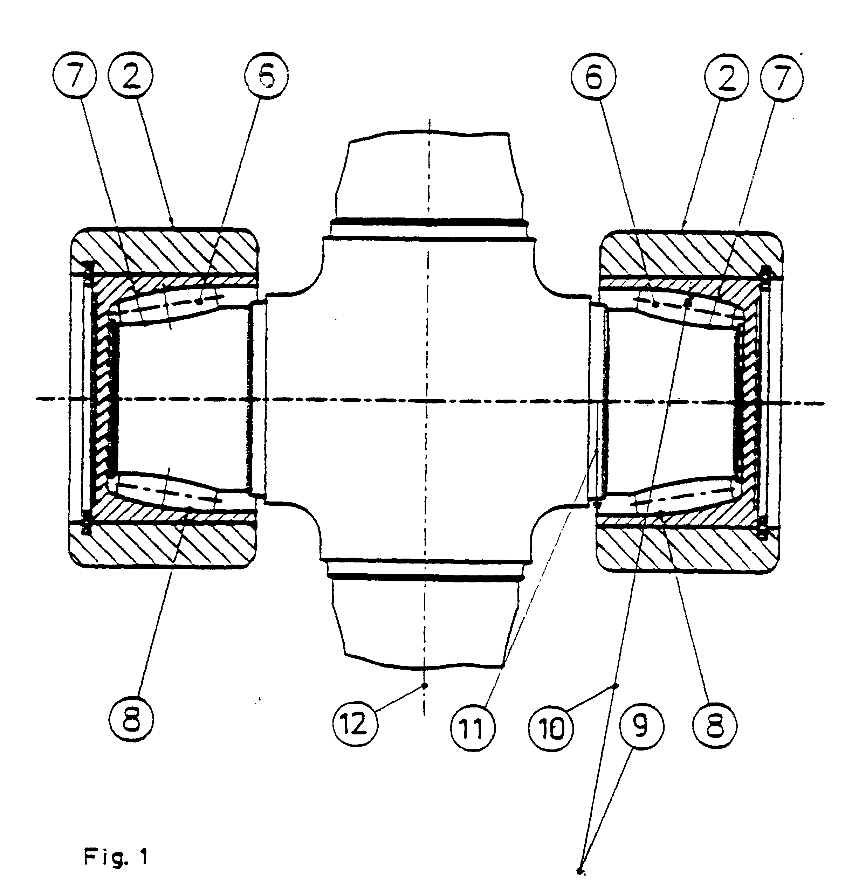

Bei dem in Figur 1 dargestellten Kreuzgelenk sind nur zwei gegenüberliegende Schrägrollenlager dargestellt. Es sind topfförmige Außenringhülsen vorgesehen, deren Boden weitere, hier nicht näher beschriebene Funktionen wie elastische Abstützung, etc. erfüllt. Beide Schrägrollenlager 2 sind mit tonnenförmigen Nadeln 6 versehen. Sie sind gegenüber ihrem Durchmesser etwa viermal so lang und gemäß der X-Anordnung schräg ausgerichtet.

Das tonnenförmige Profil entspricht der Kreisform. Entsprechend sind auch die Innen- 7 und Außenringlaufbahn 8 gekrümmt, wobei die Mittelpunkte 9 der Krümmungsradien 10 der Außenringhülse jeweils radial außerhalb des Schrägrollenlagers 2 und axial in der Ebene der inneren Seitenfläche 14 des Schrägrollenlagers 2 liegen. Weiterhin ist der Krümmungsradius 10 der Laufbahn 8 größer als der Laufbahnradius 11.

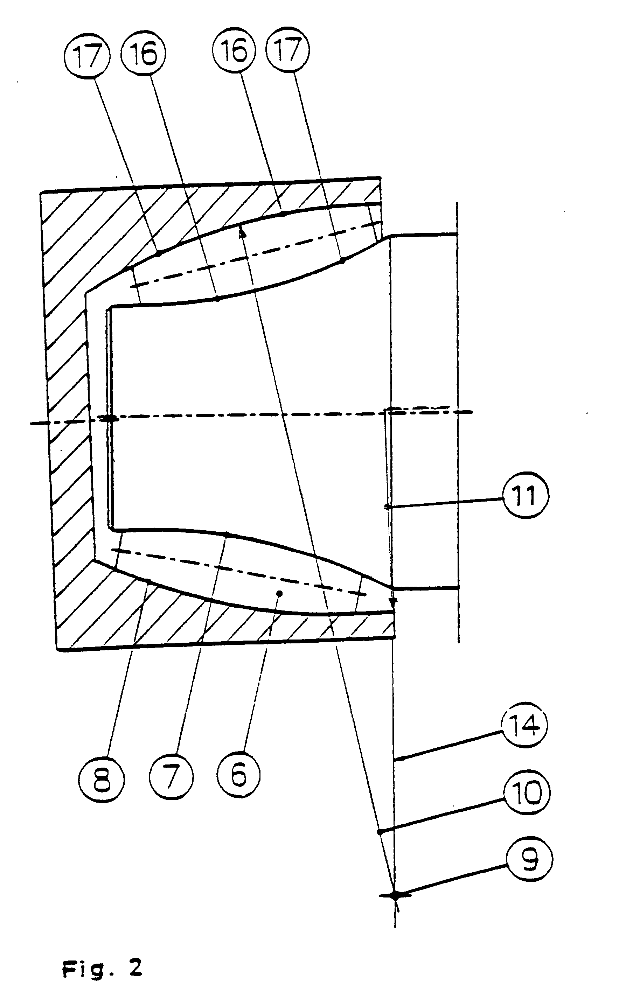

Dies geht deutlich aus Figur 2 hervor, die das grundsätzliche Verhalten des Schrägrollenlagers in Schräglage zeigt. Dabei sind weiterführende Merkmale wie Abdichtung, axiale Abstützung, etc. weggelassen. Gegenüber einer üblichen Pendelrollenlagerung sind bei dieser Ausführung die Krümmungsmittelpunkte 9 nicht gemeinsam auf der Mittelachse angeordnet und jeweils auch zur Mitte 12 zwischen den Schrägrollenlagern 2 verlagert. Aus diesem Grund ergibt sich nur eine begrenzte Schwenkmöglichkeit der Schrägrollen-Lagerung, deren maximaler Schwenkwinkel sich durch das Radialspiel ergibt, wie nicht näher dargestellt ist. Wie Figur 2 zeigt, verlagern sich die tonnenförmigen Nadeln 6, in Umfangsrichtung gesehen, bei geringem Schwenken sehr unterschiedlich. Sie laufen axial gegen die Schwenkrichtung des betreffenden Absschnittes der Außenringhülse bzw. mit der Schwenkrichtung des betreffenden Innenringabschnittes. Ein weiteres Schwenken aus der dargestellten Lage in Figur 2 ist nicht mehr möglich, da das bewußt vorgesehene Radialspiel der Normallage sich bis nach Null reduziert hat.

Diese geringe Schwenkmöglichkeit ist gerade bei Kreuzgelenken mit Schrägrollenlagern erforderlich, wodurch ein automatisches Anpassen der Tragzone mit dem Ziel größter Traglänge an den Nadeln 6 erreicht wird, da Einbautoleranzen nicht vermieden werden können.

Durch die Schrägrollenlager 2 in X-Anordnung kann die Lagerung axiale Lasten in beide Richtungen aufnehmen. Durch die spezielle Lage der Mittelpunkte 9 ergeben sich sowohl an den Außen- 8 als auch an den Innenringlaufbahnen 7 ausgeprägte Laufbahnabschnitte 16 für hohe radiale Belastungen und geneigte Abschnitte 17 für axiale Belastungen.

Die jeweils an den Gelenkzapfen eingearbeitete Laufbahn läuft im äußeren Bereich zylindrisch aus, so daß eine vollrollig bestückte Kreuzgelenkbüchse problemlos in das Auge des Gelenkes ein und auf den Gelenkzapfen aufgesetzt werden kann.

## Patentansprüche

1. Schrägrollen-Lagerung, für Kreuzgelenke mit je zwei an diametral gegenüberliegenden Gelenkzapfen angeordneten, geringfügig schwenkbeweglichen, radiale und axiale Kräfte aufnehmenden Schrägrollenlagern, wobei
- die Rollen als tonnenförmige Nadeln (6) mit einer gegenüber dem größten Durchmesser mindestens zweifachen Länge ausgeführt sind,
- die Laufbahn (8) der Außenringe eine kreisförmige axiale Krümmung aufweist,
- die Laufbahnbreite der einzelnen Laufringe mindestens der Länge der Nadeln (6) entspricht,
**dadurch gekennzeichnet, daß**
- der Krümmungsradius (10) der Laufbahn (8) größer als der maximale Laufbahnradius (11) ist und deren Mittelpunkt (9) in einem Bereich von der axialen Mitte zwischen beiden Schrägrollenlagern (2) bis zur axialen Mitte des betreffenden Schrägrollenlagers (2) angeordnet ist und
- beide Schrägrollenlager (2) ein geringes Radialspiel aufweisen.

2. Schrägrollen-Lagerung nach Anspruch 1, **dadurch gekennzeichnet, daß** der Mittelpunkt (9) zwischen der inneren Seitenfläche (14) des betreffenden Schrägrollenlagers (2) und der axialen Mitte (12) zwischen beiden Schrägrollenlagern (2) angeordnet ist.

3. Schrägrollen-Lagerung nach Anspruch 1, **dadurch gekennzeichnet, daß** der Mittelpunkt (9) in der Ebene der inneren Seitenfläche (14) des betreffenden Schrägrollenlagers (2) angeordnet ist.

4. Schrägrollen-Lagerung nach einem der vorangehenden Ansprüche, **dadurch gekennzeichnet, daß** der Krümmungsradius (10) der Außenringlaufbahn (8) größer als der zweifache maximale Laufbahnradius (11) ist.

## Claims

1. An angular roller bearing arrangement for universal joints having in each case two slightly pivotally movable angular roller bearings which are arranged on diametrically opposed joint journals and take up axial forces,
- the rollers being constructed as barrel-shaped needles (6) having a length which is at least twice the greatest diameter,
- the raceway (8) of the outer rings having a circular axial curvature,
- the raceway width of the individual races corresponding at least to the length of the needles (6),
**characterized in that**
- the radius of curvature (10) of the raceway (8) is greater than the maximum radius (11) of the raceway, and the central point (9) thereof is arranged in a region which extends from the axial centre between both angular roller bearings (2) to the axial centre of the particular angular roller bearing (2) and
- both angular roller bearings (2) have a slight radial play.

2. An angular roller bearing arrangement to Claim 1, **characterized in that** the central point (9) is arranged between the inner side face (14) of the particular angular roller bearing (2) and the axial centre (12) between both angular roller bearings (2).

3. An angular roller bearing arrangement according to Claim 1, **characterized in that** the central point (9) is arranged in the plane of the inner side face (14) of the particular angular roller bearing (2).

4. An angular roller bearing arrangement according to one of the preceding claims, **characterized in that** the radius of curvature (10) of the outer ring raceway (8) is more than twice the maximum radius (11) of the raceway.

## Revendications

1. Ensemble de roulements à rouleaux obliques pour joints universels, comportant deux roulements à rouleaux obliques qui sont disposés sur des tourillons diamétralement opposés, peuvent pivoter faiblement et supportent des efforts radiaux et axiaux,
- les rouleaux étant conformés en aiguilles (6) en forme de tonneaux, avec une longueur qui est égale à au moins deux fois le plus grand diamètre,
- la piste de roulement (8) des bagues extérieures présentant une courbure axiale circulaire,
- la largeur de la piste de roulement de chacune des bagues de roulement correspondant au moins à la longueur des aiguilles (6),
**caractérisé en ce que**
- le rayon de courbure (10) de la piste de roulement (8) est supérieur au rayon (11) maximal de la piste de roulement et son centre (9) est situé dans une zone qui s'étend depuis le milieu axial entre les deux roulements à rouleaux obliques (2) et le milieu axial du roulement à rouleaux obliques (2) concerné et
- les deux roulements à rouleaux obliques (2) présentent un faible jeu radial.

2. Palier à roulement à rouleaux obliques selon la revendication 1, **caractérisé en ce que** le centre (9) est disposé entre la face latérale (14) intérieure du roulement à rouleaux obliques (2) concerné et le milieu axial (12) entre les deux roulements à rouleaux obliques (2).

3. Palier à roulement à rouleaux obliques selon la revendication 1, **caractérisé en ce que** le centre (9) est disposé dans le plan de la face latérale (14) intérieure du roulement à rouleaux obliques (2) concerné.

4. Palier à roulement à rouleaux obliques selon une des revendications précédentes **caractérisé en ce que** le rayon de courbure (10) de la piste de roulement extérieure (8) est supérieur à deux fois le rayon maximal de la piste de roulement (11).
